# EUROPÄISCHE PATENTSCHRIFT

(11) **EP 3 277 527 B1**
(45) Veröffentlichungstag und Bekanntmachung des Hinweises auf die Patenterteilung: **26.12.2018**
(21) Anmeldenummer: 16705033.5
(22) Anmeldetag: 12.02.2016
(51) Int. Cl.: B60C 23/00

(54) **REIFENDRUCKREGULIERUNGSEINRICHTUNG**
TYRE PRESSURE REGULATING DEVICE
DISPOSITIF DE RÉGULATION DE LA PRESSION DE PNEUMATIQUES

(30) Priorität: 02.04.2015 DE 102015004366
(43) Veröffentlichungstag der Anmeldung: 07.02.2018
(73) Patentinhaber: WABCO GmbH, 30453 Hannover (DE)
(72) Erfinder: COUPPEE, Ulrich, 31863 Coppenbruegge (DE); HAVERKAMP, Michael, 30455 Hannover (DE); STELLMACHER, Thomas, 31655 Stadthagen (DE)
(74) Vertreter: Copi, Joachim
(86) Internationale Anmeldenummer: PCT/EP2016/000245
(87) Internationale Veröffentlichungsnummer: WO 2016/155860

(56) Entgegenhaltungen:
- AT-U1- 8 904

## Beschreibung

Die Erfindung betrifft eine Reifendruckregulierungseinrichtung, mittels der die Reifendrücke der Fahrzeugräder mehrerer Fahrzeugachsen eines luftbereiften Kraftfahrzeugs, beispielsweise einer Offroad-Arbeitsmaschine, während der Fahrt verstellbar sind.

Selbstfahrende Arbeitsmaschinen, wie zum Beispiel Ackerschlepper und Erntemaschinen, die für einen Offroad-Einsatz vorgesehen sind, jedoch auf dem Weg zu und von den Einsatzorten längere Strecken mit relativ hoher Fahrgeschwindigkeit auf öffentlichen Straßen zurücklegen, sind vorzugsweise mit einer Reifendruckregulierungseinrichtung versehen, mittels welcher die Reifendrücke der Fahrzeugräder veränderbar sind, also bedarfsweise erhöht oder abgesenkt werden können. Während die Fahrt auf befestigten Straßen zur Erzielung eines niedrigen Rollwiderstands und einer guten Haftung der Fahrzeugreifen auf der Fahrbahn eine durch einen erhöhten Reifendruck bewirkte kleine Aufstandsfläche der Fahrzeugreifen erfordert, ist für den Offroad-Einsatz, beispielsweise bei der Feldarbeit auf einem Acker oder bei der Holzernte im Wald, ein möglichst niedriger Reifendruck vorteilhaft, durch den aufgrund der vergrößerten Aufstandsfläche der Fahrzeugreifen ein Einsacken der Fahrzeugräder im weichen Boden sowie eine unerwünschte Verdichtung des Bodens verhindert und die Traktion der angetriebenen Fahrzeugräder erhöht wird. Da separate Druckluftquellen mit ausreichendem Druckluftvorrat meistens weder stationär noch mobil zu Verfügung stehen, sind moderne Offroad-Arbeitsmaschinen zunehmend mit einer Reifendruckregulierungseinrichtung versehen, die zur Vermeidung von langen Fahr- oder Arbeitspausen bevorzugt derart ausgebildet ist, dass die Reifendrücke der Fahrzeugräder während der Fahrt verstellbar sind. Besonders moderne Ackerschlepper sind häufig mit einer Druckluft-Bremsanlage ausgerüstet, so dass die Reifendruckregulierungseinrichtung in diesem Fall als Druckluftquelle vorteilhaft die vorhandene Druckluft-Versorgungseinrichtung der Bremsanlage nutzen kann.

In der DE 31 05 037 C2 ist eine Reifendruckregulierungseinrichtung eines zweiachsigen Kraftfahrzeugs beschrieben, bei der eine in zwei Achsverbindungsleitungen verzweigte Hauptverbindungsleitung über ein Relaisventil und ein Absperrventil mit der über ein Druckbegrenzungsventil an eine Förderdruckleitung der Druckluftquelle angeschlossene Fülldruckleitung verbindbar ist. Das Relaisventil und das Absperrventil sind druckgesteuert ausgeführt und über ein gemeinsames Vorsteuerventil ansteuerbar. In den Achsverbindungsleitungen, die jeweils in zwei äußere Radverbindungsleitungen verzweigt sind, ist jeweils ein druckgesteuertes Relaisventil angeordnet, das über ein zugeordnetes Vorsteuerventil ansteuerbar ist. Die am Fahrzeugrahmen oder an den Fahrzeugachsen angeordneten und die an den Fahrzeugrädern angeordneten Abschnitte der äußeren Radverbindungsleitungen stehen jeweils über einkanalige Drehkupplungen miteinander in Verbindung. An den Fahrzeugrädern ist jeweils ein als druckgesteuertes 2/2-Wege-Schaltventil ausgebildetes Radventil angeordnet, mittels dem eine in den Innenraum des betreffenden Radreifens führende innere Radverbindungsleitung wechselweise mit der zugeordneten äußeren Radverbindungsleitung verbindbar oder gegenüber dieser absperrbar ist. Die Steuerleitungen der Radventile zweigen jeweils von der zugeordneten äußeren Radverbindungsleitung ab. Der zum Erhöhen oder Absenken des Reifendruckes erforderliche Fülldruck wird an einem Regelventil eingestellt, über das ein Vorsteuerventil angesteuert wird, welches einem zwischen der Fülldruckleitung und der Hauptverbindungsleitung angeordneten Relaisventil zugeordnet ist. Unabhängig davon, ob der Reifendruck erhöht oder abgesenkt wird, öffnen die Radventile mit Erreichen eines festgelegten Mindestdruckes in den äußeren Radverbindungsleitungen.

Weitere Reifendruckregulierungseinrichtungen sind aus der AT 8904 U1, DE 198 04 249 A1 und der WO 2012/084690 A1 bekannt. Die DE 10 2004 021 161 B4 beschreibt eine Drehkupplung beziehungsweise Drehdurchführung in einer Reifendruckregelungsvorrichtung.

Der vorliegenden Erfindung liegt die Aufgabe zu Grunde, eine Reifendruckregulierungseinrichtung eines luftbereiften Kraftfahrzeugs der eingangs genannten Art vorzuschlagen, die im Vergleich zu den bekannten Reifendruckregulierungseinrichtungen verbesserte Betriebs- und Steuerungseigenschaften aufweist.

Die erfindungsgemäße Reifendruckregulierungseinrichtung, mittels der die Reifendrücke der Fahrzeugräder mehrerer Fahrzeugachsen eines luftbereiften Kraftfahrzeugs während der Fahrt verstellbar sind, weist die folgenden Merkmale auf:
- mindestens ein am Fahrzeugrahmen angeordnetes, elektromagentischpneumatisch steuerbares Umschaltventil, mittels dem mindestens eine zu einem Achsventil einer Fahrzeugachse führende Hauptverbindungsleitung wechselweise mit einer druckführenden Fülldruckleitung oder einer drucklosen Entlüftungsleitung verbindbar ist,
- ein für jede Fahrzeugachse am Fahrzeugrahmen angeordnetes, elektromagnetisch-pneumatisch steuerbares Achsventil, mittels dem eine in äußere Radverbindungsleitungen der betreffenden Fahrzeugachse verzweigte Achsverbindungsleitung wechselweise mit der jeweiligen Hauptverbindungsleitung verbindbar oder gegenüber dieser absperrbar ist,
- ein an jedem Fahrzeugrad angeordnetes, druckgesteuertes Radventil, mittels dem eine in den Innenraum des betreffenden Radreifens führende innere Radverbindungsleitung wechselweise mit der zugeordneten äußeren Radverbindungsleitung verbindbar oder gegenüber dieser absperrbar ist,
- ein am Fahrzeugrahmen angeordnetes, elektromagnetisch-pneumatisch steuerbares Vorsteuerventil, mittels dem eine in Achssteuerleitungen der Fahrzeugachsen verzweigte Hauptsteuerleitung wechselweise mit einer druckführenden Steuerdruckleitung oder mit einem Entlüftungsausgang verbindbar ist, und
- zwischen den Fahrzeugachsen und den zugeordneten Fahrzeugrädern angeordnete, mit schaltbaren Dichtungen versehene zweikanalige Drehkupplungen, über welche die in den äußeren Radverbindungsleitungen geführte Druckluft und das in von der jeweiligen Achssteuerleitung abzweigenden Radsteuerleitungen geführte Steuerdruckmittel druckdicht übertragen werden.

In der unbetätigten, also stromlosen Ruhestellung des Umschaltventils ist die angeschlossene Hauptverbindungsleitung üblicherweise mit der drucklosen Entlüftungsleitung verbunden, so dass der Reifendruck der Fahrzeugräder dann abgesenkt werden kann. In der betätigten, das heißt bestromten Schaltstellung des Umschaltventils wird die angeschlossene Hauptverbindungsleitung mit der druckführenden Fülldruckleitung verbunden, wodurch der Reifendruck der Fahrzeugräder erhöht werden kann.

Zum Befüllen und Entlüften der Radreifen der Fahrzeugräder ist auch das Öffnen der Achsventile und der Radventile erforderlich. Hierzu werden die Achsventile derjenigen Fahrzeugachsen, deren Radreifen befüllt oder entlüftet werden sollen, durch die Betätigung, das heißt Bestromung der betreffenden Achsventile geöffnet und damit die betreffenden Achsverbindungsleitungen mit der Hauptverbindungsleitung verbunden.

Die Achsventile derjenigen Fahrzeugachsen, bei denen die Reifendrücke unverändert bleiben sollen, verbleiben in ihrer unbetätigten, also stromlosen Ruhestellung, in welcher die betreffenden Achsverbindungsleitungen gegenüber der Hauptverbindungsleitung abgesperrt sind. Das Öffnen der Radventile erfolgt durch eine Bestromung und damit Betätigung des Vorsteuerventils, wodurch der in der Steuerdruckleitung anliegende Steuerdruck über die Hauptsteuerleitung, die Achssteuerleitungen und die Radsteuerleitungen zu den Radventilen durchgeschaltet sowie diese von ihrer geschlossenen Ruhestellung in ihre geöffnete Schaltstellung umgeschaltet werden. Dabei wird die in den äußeren Radverbindungsleitungen geführte Druckluft und das in den Radsteuerleitungen geführte Steuerdruckmittel über die zwischen den Fahrzeugachsen und den zugeordneten Fahrzeugrädern angeordneten, mit schaltbaren Dichtungen versehenen zweikanaligen Drehkupplungen getrennt druckdicht übertragen.

Nach dem Befüllen oder Entlüften von Radreifen werden die von dem Vorsteuerventil zu den Radventilen verlaufenden Steuerleitungen durch das Umschalten des Vorsteuerventils in seine Ruhestellung drucklos geschaltet, wodurch die Radventile wieder geschlossen werden. Nach einer Erhöhung des Reifendrucks werden die von dem Umschaltventil zu den Radventilen verlaufenden Verbindungsleitungen zunächst durch das Umschalten des mindestens einen Umschaltventils in seine Ruhestellung entlüftet, bevor die Achsventile geschlossen werden. Nach einem Absenken des Reifendrucks können die Achsventile dagegen sofort geschlossen werden. Durch die Druckentlastung der Radsteuerleitungen und der äußeren Radverbindungsleitungen außerhalb von Stellvorgängen wird ein dauerhaftes Andrücken der Dichtungen an die zugeordneten Dichtflächen in den Drehkupplungen vermieden und damit die Abnutzung dieser Dichtungen stark reduziert.

Durch den getrennten Aufbau der Verbindungs- und Steuerleitungswege sowie die Aufteilung der Umschalt- und Absperrfunktionen in den Verbindungsleitungen in separate Steuerventile weist die erfindungsgemäße Reifendruckregulierungseinrichtung. eine verbesserte Steuerbarkeit in Verbindung mit einer hohen Funktionssicherheit auf. Für die Ansteuerung des Umschaltventils, der Achsventile und des Vorsteuerventils sind aufgrund der elektromagnetisch-pneumatischen Betätigung dieser Steuerventile zudem relativ geringe elektrische Steuerströme erforderlich.

Zur weiteren Verbesserung der Steuerungseigenschaften dieser Reifendruckregulierungseinrichtung sind die Radsteuerventile vorzugsweise hydraulisch steuerbar ausgebildet, und zwischen dem Vorsteuerventil und der Hauptsteuerleitung ist ein pneumatisch-hydraulischer Druckwandler angeordnet, in dem der wirksame pneumatische Steuerdruck in einen hydraulischen Steuerdruck umgewandelt wird. Aufgrund der Inkompressibilität des nun in den Achssteuerleitungen und Radsteuerleitungen als Steuerdruckmittel verwendeten Hydrauliköls können die Radventile schneller geöffnet und geschlossen werden. Zudem können die mit Hydrauliköl gefüllten Radsteuerleitungen durch die betreffenden Dichtungen der Drehkupplungen im Vergleich zu Druckluft einfacher und besser gegen Leckagen abgedichtet werden. Außerdem ist das zwischen die Dichtlippen der Dichtungen und die Dichtflächen der Drehkupplungen gelangende Hydrauliköl auch als Schmiermittel wirksam, durch welches die Abnutzung der Dichtungen reduziert wird. Anstelle von klassischem Hydrauliköl kann die in den Radsteuerleitungen geführte Flüssigkeit auch ein Mineralöl oder ein biologisch abbaubares Öl sein, wobei letzteres insbesondere bei Off-Road-Fahrzeugen zu bevorzugen ist. Soweit der Begriff "Hydrauliköl" genutzt wird, umfasst dieser Begriff demnach auch ein Mineralöl oder ein biologisch abbaubares Öl.

Der pneumatisch-hydraulische Druckwandler ist bevorzugt als ein Druckbehälter ausgebildet, der teilweise mit Hydrauliköl gefüllt ist, an dem oben, also wo sich in der Einbauposition des Druckbehälters die Steuerdruckluft befindet, eine mit dem Vorsteuerventil verbundene pneumatische Hauptsteuerleitung angeschlossen ist, und an dem unten, wo sich das Hydrauliköl befindet, eine mit den Achssteuerleitungen in Verbindung stehende hydraulische Hauptsteuerleitung angeschlossen ist.

Das Vorsteuerventil, der Druckwandler und ein an die hydraulische Hauptsteuerleitung angeschlossener, mit Hydrauliköl gefüllter Ausgleichsbehälter, aus dem leckagebedingt entweichendes Hydrauliköl ersetzt werden soll, sind gemäß einer anderen Ausführungsform in einem Steuerungsmodul mit einem pneumatischen Eingangsanschluss und einem hydraulischen Ausgangsanschluss zusammengefasst, wobei das Steuerungsmodul als vormontierbare Baugruppe innerhalb der Reifendruckregulierungseinrichtung angeordnet sein kann.

Die Steuerdruckleitung und die Fülldruckleitung sind gemäß einer anderen Ausführungsform über ein Druckbegrenzungsventil an eine Förderdruckleitung einer Druckluftquelle angeschlossen. Mittels des Druckbegrenzungsventils wird ein konstanter Druck in den ausgangsseitig angeschlossenen Druckleitungen erzeugt, wodurch eine Druckerhöhung der Radreifen relativ exakt über die Öffnungszeiten der Achs- und Radventile steuerbar ist. Dieser in der Fülldruckleitung anliegende konstante Druck ist gegenüber dem in der Förderdruckleitung herrschenden Druck abgesenkt, dies ist aber von keinem oder nur geringem Nachteil, denn der in der Förderdruckleitung herrschende Druck weist abhängig von der momentanen Druckluftentnahme aus der Druckluftquelle Schwankungen auf.

Um ein schnelleres Befüllen der Radreifen zu ermöglichen, kann alternativ vorgesehen sein, dass nur die Steuerdruckleitung über ein Druckbegrenzungsventil an die Förderdruckleitung der Druckluftquelle angeschlossen ist, und dass die Fülldruckleitung unmittelbar an die Förderdruckleitung der Druckluftquelle angeschlossen ist. Aufgrund der Druckschwankungen in der Förderdruckleitung ist die Steuerbarkeit nun aber erschwert, da eine bestimmte Öffnungszeit der Achsventile und Radventile nun zu einer Unterfüllung oder Überfüllung der Radreifen führen kann.

Gemäß einer weiteren alternativen Ausführungsform der Reifendruckregulierungseinrichtung, mittels welcher ein schnelleres Befüllen der Radreifen möglich ist, ist das Vorsteuerventil über ein Druckbegrenzungsventil an die Steuerdruckleitung angeschlossen, und die Steuerdruckleitung sowie die Fülldruckleitung sind unmittelbar an die Förderdruckleitung der Druckluftquelle angeschlossen.

Um zumindest bei den beiden letztgenannten Ausführungsformen der Reifendruckregulierungseinrichtung die in den Radreifen vorliegenden Reifendrücke überwachen und damit deren Überfüllung vermeiden zu können, ist bevorzugt zumindest an jede der Achsverbindungsleitungen jeweils ein Drucksensor angeschlossen.

Um zum Befüllen und Entlüften der Radreifen ausreichend große Strömungsquerschnitte zur Verfügung zu stellen, ist vorzugsweise jedem der Achsventile jeweils ein Umschaltventil vorgeschaltet.

Alle Umschaltventile können elektromagnetisch-pneumatisch steuerbar ausgebildet und baugleich ausgeführt sein, wodurch das gleichzeitige Befüllen der Radreifen einer Fahrzeugachse und das Entlüften der Radreifen einer anderen Fahrzeugachse möglich sind. Durch die baugleiche Ausführung der Umschaltventile sind deren Erstehungskosten zudem relativ niedrig.

Alternativ dazu kann jedoch auch vorgesehen sein, dass nur eines der Umschaltventile elektromagnetisch-pneumatisch steuerbar ausgebildet ist, und dass die übrigen Umschaltventile pneumatisch steuerbar ausgebildet sowie über eine Koppelsteuerleitung an die Steuereinheit des erstgenannten Umschaltventils angeschlossen sind. Dem Vorteil der Kosteneinsparung durch den Wegfall der Magnetsteuereinheiten steht jedoch der Nachteil einer gleichsinnigen Betätigung der Umschaltventile gegenüber, wodurch es nur möglich ist, gleichzeitig alle Radreifen zu befüllen oder zu entlüften.

Wenn diese Steuerungsmöglichkeit aber ohnehin als ausreichend angesehen wird, kann den Achsventilen auch ein gemeinsames elektromagnetisch-pneumatisch steuerbares Umschaltventil mit entsprechend großen Strömungsquerschnitten vorgeschaltet sein.

Zur weiteren Verdeutlichung der Erfindung ist der Beschreibung eine Zeichnung mit mehreren Ausführungsbeispielen beigefügt. In dieser zeigt
Fig. 1 eine erste Ausführungsform einer erfindungsgemäßen Reifendruckregulierungseinrichtung in einer schematischen Übersichtsdarstellung,
Fig. 2 eine zweite Ausführungsform der Reifendruckregulierungseinrichtung in einer schematischen Übersichtsdarstellung,
Fig. 3 eine dritte Ausführungsform der Reifendruckregulierungseinrichtung in einer schematischen Übersichtsdarstellung,
Fig. 4 eine vierte Ausführungsform der Reifendruckregulierungseinrichtung in einer schematischen Übersichtsdarstellung, und
Fig. 5 eine fünfte Ausführungsform der Reifendruckregulierungseinrichtung in einer schematischen Übersichtsdarstellung.

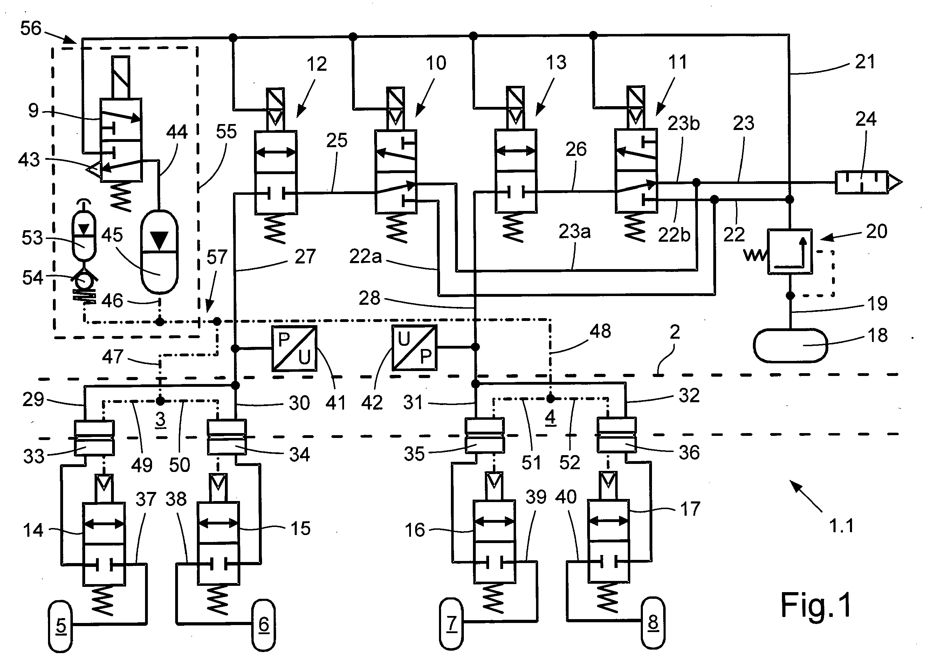

In der schematischen Übersichtsdarstellung der Fig. 1 ist eine erste Ausführungsform einer erfindungsgemäßen Reifendruckregulierungseinrichtung 1.1 eines beispielhaft zwei Fahrzeugachsen 3, 4 mit jeweils zwei Fahrzeugrädern 5, 6; 7, 8 aufweisenden Kraftfahrzeugs abgebildet.

Die Reifendruckregulierungseinrichtung 1.1 weist ein Vorsteuerventil 9, zwei Umschaltventile 10, 11 und zwei Achsventile 12, 13 auf, die an einem durch eine gestrichelte Linie markierten Fahrzeugrahmen 2 angeordnet sind. Außerdem gehören zu der Reifendruckregulierungseinrichtung 1.1 vier Radventile 14, 15, 16, 17, die jeweils an schematisch dargestellten Fahrzeugrädern 5, 6, 7, 8 der beiden Fahrzeugachsen 3, 4 angeordnet sind. Das Vorschaltventil 9 ist als ein elektromagnetisch betätigbares 3/2-Wege-Schaltventil ausgeführt, das erste Umschaltventil 10 und das zweite Umschaltventil 11 sind elektromagnetisch-pneumatisch betätigbare 3/2-Wege-Schaltventile, und das erste Achsventil 12 sowie das zweite Achsventil 13 sind als elektromagnetisch-pneumatisch betätigbare 2/2-Wege-Schaltventile ausgebildet und an eine druckführende Steuerdruckleitung 21 angeschlossen. Die beiden Umschaltventile 10, 11 und die beiden Achsventile 12, 13 sind jeweils einer der beiden Fahrzeugachsen 3, 4 zugeordnet. So sind das erste Umschaltventil 10 und das erste Achsventil 12 der Vorderachse 3 zugeordnet, wogegen das zweite Umschaltventil 11 und das zweite Achsventil 13 der Hinterachse 4 zugeordnet sind. Die am Fahrzeugrahmen 2 angeordneten Steuerventile, also das Vorschaltventil 9, die beiden Umschaltventile 10, 11 sowie die beiden Achsventile 12, 13 stehen steuerungstechnisch über nicht abgebildete elektrische Steuerungsleitungen wie an sich bekannt mit einem nicht dargestellten elektronischen Steuergerät in Verbindung. Die an den vier Fahrzeugrädern 5, 6, 7, 8 angeordneten vier Radventile 14, 15, 16, 17 sind als druckgesteuerte 2/2-Wege-Schaltventile ausgebildet.

Über die beiden Umschaltventile 10, 11 ist jeweils eine zu dem zugeordneten Achsventil 12, 13 führende Hauptverbindungsleitung 25, 26 wechselweise mit einem ersten Zweig 22a oder dem zweiten Zweig 22b einer druckführenden Fülldruckleitung 22 beziehungsweise dem ersten Zweig 23a oder den zweiten Zweig 23b einer drucklosen Entlüftungsleitung 23 verbindbar.

Im unbetätigten, also unbestromten Zustand der beiden Umschaltventile 10, 11, in der sich diese in ihrer Ruhestellung befinden, ist die jeweilige Hauptverbindungsleitung 25, 26 mit der drucklosen Entlüftungsleitung 23 verbunden, welche über einen Schalldämpfer 24 ins Freie führt. Im betätigten, also bestromten Zustand der beiden Umschaltventile 10, 11, in dem diese ihre Schaltstellung einnehmen, ist die jeweilige Hauptverbindungsleitung 25, 26 mit der druckführenden Fülldruckleitung 22 verbunden.

Vorliegend sind die Steuerdruckleitung 21 und die Fülldruckleitung 22 über ein Druckbegrenzungsventil 20 an eine aus einer Druckluftquelle 18 gespeiste Förderdruckleitung 19 angeschlossen. Hierdurch liegt in der Steuerdruckleitung 21 und der Fülldruckleitung 22 jeweils ein weitgehend konstanter Druck an, der jedoch gegenüber dem in Förderdruckleitung 19 herrschenden und Schwankungen unterworfenen Druck reduziert ist.

Über die beiden Achsventile 12, 13 ist jeweils eine erste Achsverbindungsleitung 27 und eine zweite Achsverbindungsleitung 28, die jeweils an der zugeordneten Fahrzeugachse 3, 4 in zwei äußere Radverbindungsleitungen 29, 30; 31, 32 verzweigt ist, wechselweise mit der zugeordneten Hauptverbindungsleitung 25, 26 verbindbar oder gegenüber dieser absperrbar. Im unbetätigten, also unbestromten Zustand der beiden Achsventile 12, 13, in der sich diese in ihrer Ruhestellung befinden, ist die jeweilige Achsverbindungsleitung 27, 28 gegenüber der zugeordneten Hauptverbindungsleitung 25, 26 abgesperrt. Im betätigten, also bestromten Zustand der beiden Achsventile 12, 13, in der diese ihre Schaltstellung einnehmen, ist die jeweilige Achsverbindungsleitung 27, 28 mit der zugeordneten Hauptverbindungsleitung 25, 26 verbunden. An den beiden Achsverbindungsleitungen 27, 28 ist jeweils ein erster Drucksensor 41 und ein zweiter Drucksensor 42 angeschlossen, die über nicht abgebildete elektrische Sensorleitungen mit dem bereits genannten Steuergerät in Verbindung stehen.

Die vier äußeren Radverbindungsleitungen 29, 30, 31, 32 sind über jeweils zweikanalige, mit schaltbaren Dichtungen versehene Drehkupplungen 33, 34, 35, 36 von den Fahrzeugachsen 3, 4 bis an die an den Fahrzeugrädern 5, 6, 7, 8 angeordneten Radventile 14, 15, 16, 17 geführt. Über die vier Radventile 14, 15, 16, 17 ist jeweils eine in den Innenraum des betreffenden Radreifens führende innere Radverbindungsleitung 37, 38, 39, 40 wechselweise mit der zugeordneten äußeren Radverbindungsleitung 29, 30, 31, 32 verbindbar oder gegenüber dieser absperrbar. Im unbetätigten, also steuerdrucklosen Zustand der vier Radventile 14, 15, 16, 17, in der sich diese in ihrer Ruhestellung befinden, ist die jeweilige erste bis vierte innere Radverbindungsleitung 37, 38, 39, 40 gegenüber der zugeordneten äußeren ersten bis vierten Radverbindungsleitung 29, 30, 31, 32 abgesperrt. Im betätigten, also steuerdruckbeaufschlagten Zustand der vier Radventile 14, 15, 16, 17, in der diese ihre Schaltstellung einnehmen, ist die jeweilige innere Radverbindungsleitung 37, 38, 39, 40 mit der zugeordneten äußeren Radverbindungsleitung 29, 30, 31, 32 verbunden.

Die Betätigung der vier Radventile 14, 15, 16, 17 erfolgt mittels des Vorsteuerventils 9 und einen diesem nachgeschalteten pneumatisch-hydraulischen Druckwandler 45. Über das Vorsteuerventil 9 ist eine zu dem Druckwandler 45 führende pneumatische Hauptsteuerleitung 44 wechselweise mit der Steuerdruckleitung 21 oder mit einem Entlüftungsausgang 43 verbindbar. Im unbetätigten, also unbestromten Zustand des Vorsteuerventils 9, in der sich dieses in seiner Ruhestellung befindet, ist die pneumatische Hauptsteuerleitung 44 mit dem Entlüftungsausgang 43 verbunden und somit drucklos. Im betätigten, also bestromten Zustand des Vorsteuerventils 9, in der dieses seine Schaltstellung einnimmt, ist die pneumatische Hauptsteuerleitung 44 mit der Steuerdruckleitung 21 verbunden und somit druckführend. Der Druckwandler 45 ist als ein Druckbehälter ausgebildet und teilweise mit Hydrauliköl gefüllt. An dem Druckwandler 45 ist oben, wo sich die Steuerdruckluft befindet, die pneumatische Hauptsteuerleitung 44 angeschlossen, und unten, wo sich das Hydrauliköl befindet, eine hydraulische Hauptsteuerleitung 46 angeschlossen. In dem Druckwandler 45 wird der in der pneumatischen Hauptsteuerleitung 44 wirksame pneumatische Steuerdruck in einen in der hydraulischen Hauptsteuerleitung 46 wirksamen hydraulischen Steuerdruck umgewandelt.

Die hydraulische Hauptsteuerleitung 46 ist in zwei zu den Fahrzeugachsen 3, 4 führende Achssteuerleitungen 47, 48 verzweigt. Die erste Achssteuerleitung 47 und die zweite Achssteuerleitung 48 sind jeweils in zwei Radsteuerleitungen 49, 50; 51, 52 verzweigt, welche über die vier Drehkupplungen 33, 34, 35, 36 an die vier Radventile 14, 15, 16, 17 geführt sind. Zum Ausgleich von leckagebedingt entweichendem Hydrauliköl ist ein mit Hydrauliköl gefüllter Ausgleichsbehälter 53 über ein Rückschlagventil 54 an die hydraulische Hauptsteuerleitung 46 angeschlossen. Der Ausgleichsbehälter 53 weist an seinem oberen Ende erkennbar einen entlüftbaren Einfüllanschluss auf. Das Vorsteuerventil 9, der Druckwandler 45 und der Ausgleichsbehälter 53 sind in einem Steuerungsmodul 55 mit einem pneumatischen Eingangsanschluss 56 und einem hydraulischen Ausgangsanschluss 57 zusammengefasst, wobei das Steuerungsmodul 55 als vormontierbare Baugruppe innerhalb der Reifendruckregulierungseinrichtung 1.1 angeordnet ist.

Zum Befüllen und Entlüften der Radreifen werden die beiden Umschaltventile 10, 11 in ihre Schaltstellung geschaltet, in welcher die beiden Hauptverbindungsleitungen 25, 26 mit der Fülldruckleitung 22 verbunden sind, oder sie verbleiben in ihrer Ruhestellung, in welcher die beiden Hauptverbindungsleitungen 25, 26 mit der Entlüftungsleitung 23 verbunden sind. Anschließend werden die Achsventile 12, 13 derjenigen Fahrzeugachsen 3, 4, deren Radreifen befüllt oder entlüftet werden sollen, durch die Betätigung, also die Bestromung der betreffenden Achsventile 12, 13 geöffnet und damit die betreffenden Achsverbindungsleitungen 27, 28 mit den zugeordneten Hauptverbindungsleitungen 25, 26 verbunden. Die Achsventile 12, 13 derjenigen Fahrzeugachsen 3, 4, bei denen die Reifendrücke unverändert bleiben sollen, verbleiben in ihrer unbetätigten, also stromlosen Ruhestellung, in welcher die betreffenden Achsverbindungsleitungen 27, 28 gegenüber den zugeordneten Hauptverbindungsleitungen 25, 26 abgesperrt sind.

Zudem werden für das Befüllen und Entlüften der Radreifen alle Radventile 14, 15, 16, 17 geöffnet. Dies erfolgt durch die Betätigung, also die Bestromung des Vorsteuerventils 9, wodurch die pneumatische Hauptsteuerleitung 44 mit der Steuerdruckleitung 21 verbunden und der in der Steuerdruckleitung 21 anliegende Steuerdruck über die pneumatische Hauptsteuerleitung 44, den Druckwandler 45 und die hydraulische Hauptsteuerleitung 46 in die beiden Achssteuerleitungen 47, 48 sowie von diesen über die vier Radsteuerleitungen 49, 50, 51, 52 und die vier Drehkupplungen 33, 34, 35, 36 bis an die Steuereingänge der vier Radventile 14, 15, 16, 17 durchgeschaltet wird. Durch die Beaufschlagung mit dem Steuerdruck werden die vier Radventile 14, 15, 16, 17 von ihrer geschlossenen Ruhestellung in ihre geöffnete Schaltstellung umgeschaltet, so dass eine durchgehende Verbindung zwischen den Innenräumen der Radreifen bei der Fahrzeugachsen 3, 4 und, je nach Schaltstellung der beiden Umschaltventile 10, 11, mit der Fülldruckleitung 22 oder der Entlüftungsleitung 23 besteht.

Da vorliegend jeder Fahrzeugachse 3, 4 ein eigenes Umschaltventil 10, 11 zugeordnet ist, kann der Reifendruck in den Radreifen der Vorderachse 3 und der Hinterachse 4 unabhängig voneinander und auch gegensinnig eingestellt beziehungsweise verändert werden. So kann zum Beispiel der Reifendruck in den Radreifen der Vorderachse 3 durch das Belassen des zugeordneten ersten Umschaltventils 10 in seiner Ruhestellung reduziert und der Reifendruck in den Radreifen der Hinterachse 4 durch das Umschalten des zugeordneten zweiten Umschaltventils 11 in seine Schaltstellung gleichzeitig erhöht werden.

Der in den Radreifen der Fahrzeugachsen 3, 4 vorliegende Reifendruck kann mittels der Drucksensoren 41, 42 erfasst und überwacht werden, so dass eine Überfüllung oder Unterfüllung der Radreifen verhindert werden kann. Mittels der beiden Drucksensoren 41, 42 kann der in den Radreifen vorliegende Reifendruck auch außerhalb von Verstellvorgängen, zum Beispiel während der Straßenfahrt oder während eines Arbeitseinsatzes abseits befestigter Straßen, überprüft werden, indem die Radventile 14, 15, 16, 17 bei geschlossenen Achsventilen 12, 13 kurzzeitig geöffnet und dann die in den Achsverbindungsleitungen 27, 28 vorliegenden Drücke erfasst werden. Durch die gewählte Anordnung der Drucksensoren 41, 42 können diese auch zur Ermittlung von Leckagen verwendet werden.

Durch den getrennten Aufbau der Verbindungswege und der Steuerleitungswege sowie die Aufteilung der Umschaltfunktionen und Absperrfunktionen in den Verbindungsleitungen 25, 26, 27, 28 in separate Steuerventile 10, 11, 12, 13 weist die erfindungsgemäße Reifendruckregulierungseinrichtung 1.1 gegenüber bekannten Reifendruckregulierungseinrichtungen eine verbesserte Steuerbarkeit in Verbindung mit einer hohen Funktionssicherheit auf. Für die Ansteuerung der beiden Umschaltventile 10, 11 und der Achsventile 12, 13 sind wegen der elektromagnetisch-pneumatischen Betätigung dieser Steuerventile zudem relativ geringe Steuerströme erforderlich. Aufgrund der Inkompressibilität des in den beiden Achssteuerleitungen 47, 48 und in den vier Radsteuerleitungen 49, 50, 51, 52 als Steuerdruckmittel verwendeten Hydrauliköls können die vier Radventile 14, 15, 16, 17 schneller geöffnet und geschlossen werden. Zudem können die mit Hydrauliköl gefüllten Radsteuerleitungen 49, 50, 51, 52 durch die betreffenden Dichtungen der Drehkupplungen 33, 34, 35, 36 im Vergleich zu einer Nutzung von Druckluft einfacher und besser gegen Leckagen abgedichtet werden. Ebenso ist das zwischen die Dichtlippen der Dichtungen und die Dichtflächen der Drehkupplungen 33, 34, 35, 36 gelangende Hydrauliköl auch als Schmiermittel wirksam, durch welches die Abnutzung der Dichtungen reduziert wird.

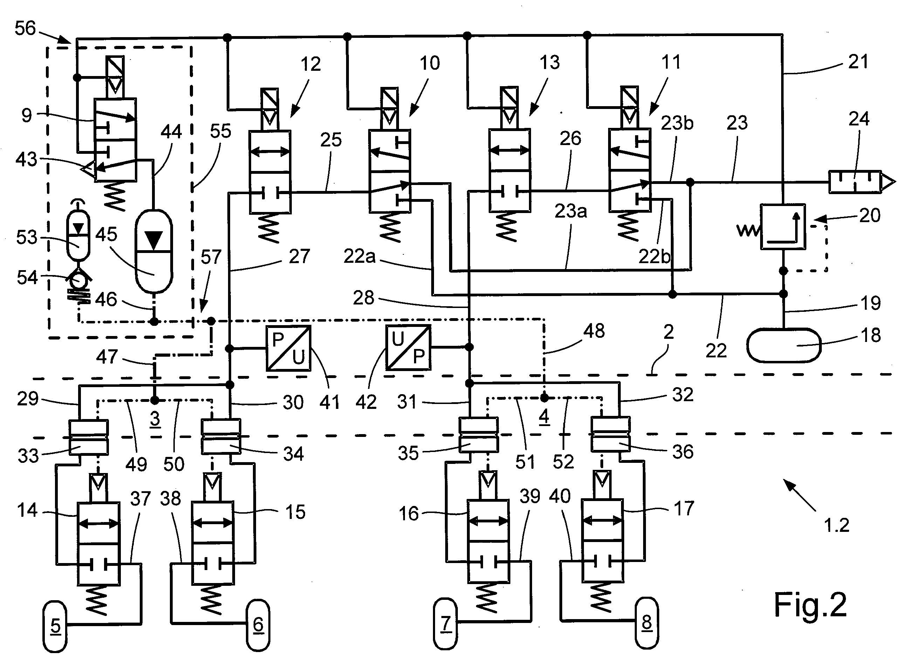

Die in Fig. 2 abgebildete zweite Reifendruckregulierungseinrichtung 1.2 unterscheidet sich von der ersten Ausführungsform gemäß Fig. 1 dadurch, dass nur die Steuerdruckleitung 21 über das Druckbegrenzungsventil 20 an die Förderdruckleitung 19 der Druckluftquelle 18 angeschlossen ist, und dass die Fülldruckleitung 22 nun unmittelbar an die Förderdruckleitung 19 der Druckluftquelle 18 angeschlossen ist. Außerdem ist das Vorsteuerventil 9 bei dieser Reifendruckregulierungseinrichtung 1.2 beispielhaft als ein elektromagnetisch-pneumatisch betätigbares 3/2-Wege-Schaltventil ausgebildet, so dass auch das Vorsteuerventil 9 mit sehr geringen Kräften elektromagnetisch geschaltet werden kann.

Aufgrund des in der Förderdruckleitung 19 vorliegenden höheren Druckes ist nun ein schnelleres Befüllen der Radreifen, also eine schnellere Erhöhung der Reifendrücke der Radreifen möglich. Da der in der Förderdruckleitung 19 herrschende Druck jedoch, abhängig von der Höhe der momentanen Druckluftentnahme auch durch andere Verbraucher, Schwankungen aufweisen kann, ist es zweckmäßig, die in den Radreifen der Fahrzeugräder 5, 6, 7, 8 vorliegenden Reifendrücke mittels der beiden Drucksensoren 41, 41 zu überwachen, um eine Überfüllung der Radreifen zu vermeiden. Die allgemeine Funktionsweise der zweiten Reifendruckregulierungseinrichtung 1.2 entspricht jedoch derjenigen der Reifendruckregulierungseinrichtung 1.1 gemäß Fig. 1.

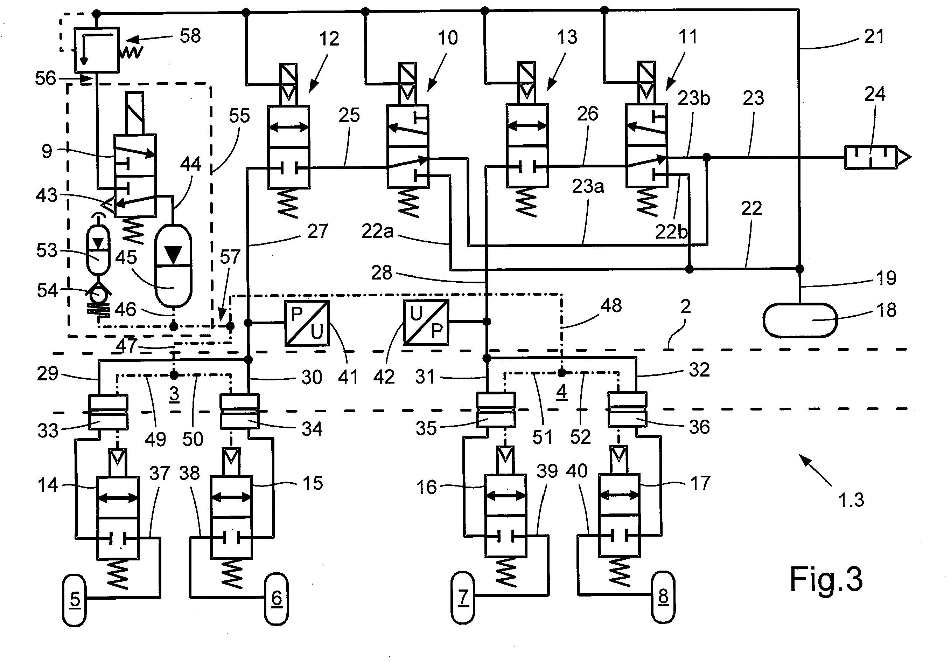

Die in Fig. 3 abgebildete dritte Reifendruckregulierungseinrichtung 1.3 unterscheidet sich von der ersten Ausführungsform gemäß Fig. 1 und der zweiten Ausführungsform gemäß Fig. 2 dadurch, dass das Vorsteuerventil 9 nun über ein Druckbegrenzungsventil 58 an die Steuerdruckleitung 21 angeschlossen ist, und dass die Steuerdruckleitung 21 sowie die Fülldruckleitung 22 unmittelbar an die Förderdruckleitung 19 der Druckluftquelle 18 angeschlossen sind.

Auch bei dieser Ausführungsform der Reifendruckregulierungseinrichtung 1.3 ist ein schnelleres Befüllen der Radreifen möglich. Der ebenso wie die Drehkupplungen 33, 34, 35, 36 gegen Druckschwankungen empfindliche pneumatisch-hydraulische Druckwandler 45 sowie die Steuereingänge der diesem nachgeschalteten Radventile 14, 15, 16, 17 werden bei geöffnetem Vorschaltventil 9 aufgrund des vorgeordneten Druckbegrenzungsventils 58 weiterhin von einem konstanten Steuerdruck beaufschlagt. Dagegen werden die Steuereingänge der beiden Umschaltventile 10, 11 sowie der beiden Achsventile 12, 13 nun unmittelbar von dem in der Förderdruckleitung 19 herrschenden höheren und schwankungsbehafteten Druck beaufschlagt. Die allgemeine Funktionsweise der dritten Ausführungsform der Reifendruckregulierungseinrichtung 1.3 entspricht jedoch derjenigen der Reifendruckregulierungseinrichtung 1.1 gemäß Fig. 1 und der Reifendruckregulierungseinrichtung 1.2 gemäß Fig. 2.

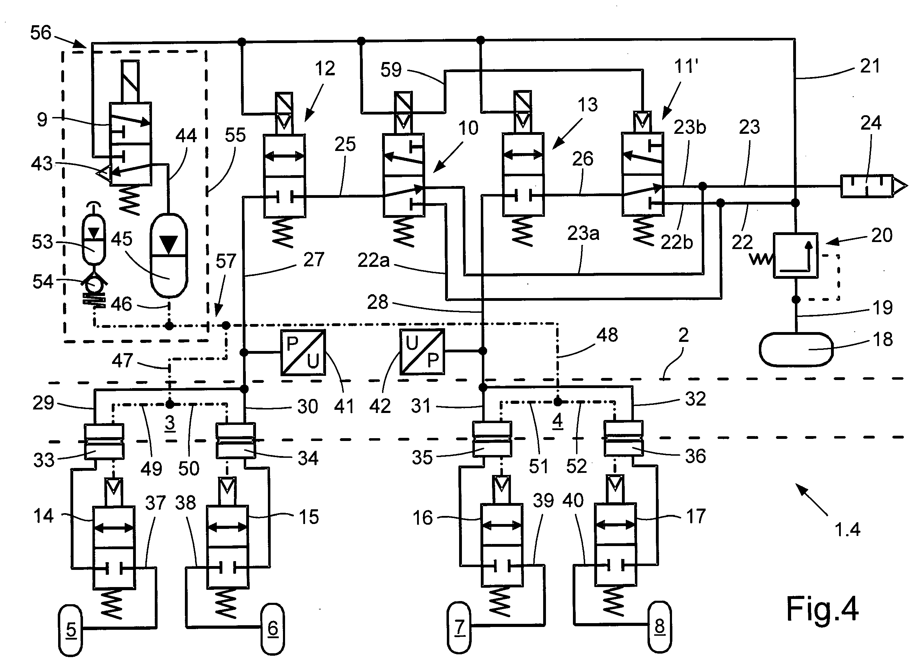

Die in Fig. 4 in einer schematischen Übersichtsdarstellung abgebildete vierte Ausführungsform einer erfindungsgemäßen Reifendruckregulierungseinrichtung 1.4 unterscheidet sich von der ersten Reifendruckregulierungseinrichtung gemäß Fig. 1 dadurch, dass das der Hinterachse 4 zugeordnete zweite Umschaltventil 11' nun als ein rein pneumatisch steuerbares 3/2-Wege-Schaltventil ausgebildet ist, dessen Steuereingang über eine Koppelsteuerleitung 59 an die Steuereinheit des der Vorderachse 3 zugeordneten ersten Umschaltventils 10 angeschlossen ist.

Bei dieser Reifendruckregulierungseinrichtung 1.4 wird das zweite Umschaltventil 11' dadurch gleichsinnig durch das erste Umschaltventil 10 angesteuert, so dass beide Hauptverbindungsleitungen 25, 26 je nach Schaltstellung des ersten Umschaltventils 10 entweder mit der Fülldruckleitung 22 oder der Entlüftungsleitung 23 verbunden sind. Somit ist bei dieser Reifendruckregulierungseinrichtung 1.4 nur das gleichzeitige Erhöhen oder Absenken der Reifendrücke an den vier Fahrzeugrädern 5, 6, 7, 8 der beiden Fahrzeugachsen 2, 3 möglich. Der übrige Funktionsumfang der Reifendruckregulierungseinrichtung 1.4 entspricht jedoch demjenigen der vorbeschriebenen drei Reifendruckregulierungseinrichtungen 1.1, 1.2, 1.3 gemäß den Figuren 1 bis 3.

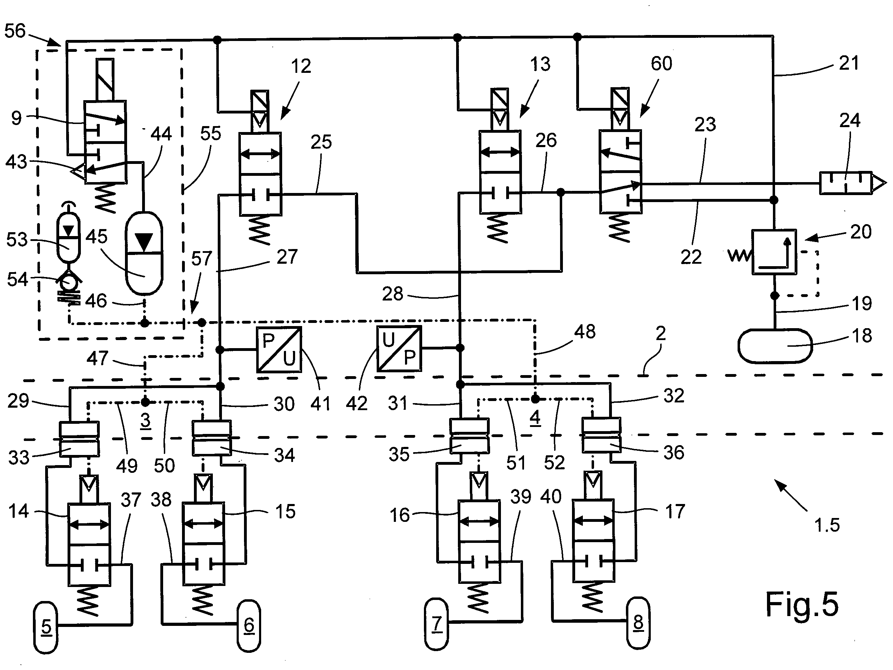

Eine in Fig. 5 abgebildete fünfte Reifendruckregulierungseinrichtung 1.5 unterscheidet sich von der ersten Reifendruckregulierungseinrichtung gemäß Fig. 1 und der vierten Reifendruckregulierungseinrichtung gemäß Fig. 4 dadurch, dass nun nur ein einziges Umschaltventil 60 vorgesehen ist, welches als ein elektromagnetisch-pneumatisch steuerbares 3/2-Wege-Schaltventil ausgebildet ist, und über welches die beiden zusammengeführten Hauptverbindungsleitungen 25, 26 wechselweise mit der Fülldruckleitung 22 oder der Entlüftungsleitung 23 verbindbar sind. Um ein schnelles Befüllen oder Entleeren der Radreifen zu ermöglichen, weist das Umschaltventil 60 entsprechend größere Strömungsquerschnitte auf als die Umschaltventile 10, 11, 11' in den vorbeschriebenen Ausführungsformen der Reifendruckregulierungseinrichtungen 1.1, 1.2, 1.3, 1.4. Der Funktionsumfang der fünften Reifendruckregulierungseinrichtung 1.5 entspricht exakt derjenigen der vierten Reifendruckregulierungseinrichtung 1.4 gemäß Fig. 4.

### Bezugszeichenliste (Teil der Beschreibung)

- 1.1: Reifendruckregulierungseinrichtung gemäß erster Ausführungsform
- 1.2: Reifendruckregulierungseinrichtung gemäß zweiter Ausführungsform
- 1.3: Reifendruckregulierungseinrichtung gemäß dritter Ausführungsform
- 1.4: Reifendruckregulierungseinrichtung gemäß vierter Ausführungsform
- 1.5: Reifendruckregulierungseinrichtung gemäß fünfter Ausführungsform
- 2: Fahrzeugrahmen
- 3: Fahrzeugachse, Vorderachse
- 4: Fahrzeugachse, Hinterachse
- 5: Fahrzeugrad, linkes Vorderrad
- 6: Fahrzeugrad, rechtes Vorderrad
- 7: Fahrzeugrad, linkes Hinterrad
- 8: Fahrzeugrad, rechtes Hinterrad
- 9: Vorsteuerventil
- 10: Erstes Umschaltventil
- 11, 11': Zweites Umschaltventil
- 12: Erstes Achsventil
- 13: Zweites Achsventil
- 14: Erstes Radventil
- 15: Zweites Radventil
- 16: Drittes Radventil
- 17: Viertes Radventil
- 18: Druckluftquelle
- 19: Förderdruckleitung
- 20: Druckbegrenzungsventil
- 21: Steuerdruckleitung
- 22: Fülldruckleitung
- 22a: Erster Zweig der Fülldruckleitung
- 22b: Zweiter Zweig der Fülldruckleitung
- 23: Entlüftungsleitung
- 23a: Erster Zweig der Entlüftungsleitung
- 23b: Zweiter Zweig der Entlüftungsleitung
- 24: Schalldämpfer
- 25: Erste Hauptverbindungsleitung
- 26: Zweite Hauptverbindungsleitung
- 27: Erste Achsverbindungsleitung
- 28: Zweite Achsverbindungsleitung
- 29: Erste äußere Radverbindungsleitung
- 30: Zweite äußere Radverbindungsleitung
- 31: Dritte äußere Radverbindungsleitung
- 32: Vierte äußere Radverbindungsleitung
- 33: Erste Drehkupplung
- 34: Zweite Drehkupplung
- 35: Dritte Drehkupplung
- 36: Vierte Drehkupplung
- 37: Erste innere Radverbindungsleitung
- 38: Zweite innere Radverbindungsleitung
- 39: Dritte innere Radverbindungsleitung
- 40: Vierte innere Radverbindungsleitung
- 41: Erster Drucksensor
- 42: Zweiter Drucksensor
- 43: Entlüftungsausgang
- 44: Pneumatische Hauptsteuerleitung
- 45: Druckwandler
- 46: Hydraulische Hauptsteuerleitung
- 47: Erste Achssteuerleitung
- 48: Zweite Achssteuerleitung
- 49: Erste Radsteuerleitung
- 50: Zweite Radsteuerleitung
- 51: Dritte Radsteuerleitung
- 52: Vierte Radsteuerleitung
- 53: Ausgleichsbehälter
- 54: Rückschlagventil
- 55: Steuerungsmodul
- 56: Pneumatischer Eingangsanschluss
- 57: Hydraulischer Ausgangsanschluss
- 58: Druckbegrenzungsventil
- 59: Koppelsteuerleitung
- 60: Umschaltventil

## Patentansprüche

1. Reifendruckregulierungseinrichtung (1.1, 1.2, 1.3, 1.4, 1.5), mittels der die Reifendrücke der Fahrzeugräder (5, 6, 7, 8) mehrerer Fahrzeugachsen (3, 4) eines luftbereiften Kraftfahrzeugs während der Fahrt verstellbar sind, mit folgenden Merkmalen:
- mindestens ein am Fahrzeugrahmen (2) angeordnetes, elektromagentischpneumatisch steuerbares Umschaltventil (10, 11; 11'; 60), mittels dem mindestens eine zu einem Achsventil (12, 13) einer Fahrzeugachse (3, 4) führende Hauptverbindungsleitung (25, 26) wechselweise mit einer druckführenden Fülldruckleitung (22) oder einer drucklosen Entlüftungsleitung (23) verbindbar ist,
- ein für jede Fahrzeugachse (3, 4) am Fahrzeugrahmen (2) angeordnetes, elektromagnetisch-pneumatisch steuerbares Achsventil (12, 13), mittels dem eine in äußere Radverbindungsleitungen (29, 30, 31, 32) der betreffenden Fahrzeugachse (3, 4) verzweigte Achsverbindungsleitung (27, 28) wechselweise mit der jeweiligen Hauptverbindungsleitung (25, 26) verbindbar oder gegenüber dieser absperrbar ist,
- ein an jedem Fahrzeugrad (5, 6, 7, 8) angeordnetes, druckgesteuertes Radventil (14, 15, 16, 17), mittels dem eine in den Innenraum des betreffenden Radreifens führende innere Radverbindungsleitung (37, 38, 39, 40) wechselweise mit der zugeordneten äußeren Radverbindungsleitung (29, 30, 31, 32) verbindbar oder gegenüber dieser absperrbar ist, **gekennzeichnet durch**
- ein am Fahrzeugrahmen (2) angeordnetes, rein elektromagnetisch oder elektromagnetisch-pneumatisch steuerbares Vorsteuerventil (9), mittels dem eine in Achssteuerleitungen (47, 48) der Fahrzeugachsen (3, 4) verzweigte Hauptsteuerleitung (44, 46) wechselweise mit einer druckführenden Steuerdruckleitung (21) oder mit einem Entlüftungsausgang (43) verbindbar ist,
- zwischen den Fahrzeugachsen (3, 4) und den zugeordneten Fahrzeugrädern (5, 6, 7, 8) angeordnete, mit schaltbaren Dichtungen versehene zweikanalige Drehkupplungen (33, 34, 35, 36), über welche die in den äußeren Radverbindungsleitungen (29, 30, 31, 32) geführte Druckluft und das in von der jeweiligen Achssteuerleitung (47, 48) abzweigenden Radsteuerleitungen (49, 50, 51, 52) geführte Steuerdruckmittel druckdicht übertragen werden.

2. Reifendruckregulierungseinrichtung nach Anspruch 1, **dadurch gekennzeichnet, dass** die Radsteuerventile (14, 15, 16, 17) hydraulisch steuerbar ausgebildet sind, und dass zwischen dem Vorsteuerventil (9) sowie der Hauptsteuerleitung (46) ein pneumatisch-hydraulischer Druckwandler (45) angeordnet ist, in dem der wirksame pneumatische Steuerdruck in einen hydraulischen Steuerdruck umgewandelt wird.

3. Reifendruckregulierungseinrichtung nach Anspruch 2, **dadurch gekennzeichnet, dass** der pneumatisch-hydraulische Druckwandler (45) als ein Druckbehälter ausgebildet ist, der teilweise mit Hydrauliköl gefüllt ist, an dem oben eine mit dem Vorsteuerventil (9) verbundene pneumatische Hauptsteuerleitung (44) angeschlossen ist, und an dem unten eine mit den Achssteuerleitungen (47, 48) in Verbindung stehende hydraulische Hauptsteuerleitung (46) angeschlossen ist.

4. Reifendruckregulierungseinrichtung nach Anspruch 2 oder 3, **dadurch gekennzeichnet, dass** das Vorsteuerventil (9), der Druckwandler (45) und ein an die hydraulische Hauptsteuerleitung (46) angeschlossener, mit Hydrauliköl gefüllter Ausgleichsbehälter (53) in einem Steuerungsmodul (55) mit einem pneumatischen Eingangsanschluss (56) und einem hydraulischen Ausgangsanschluss (57) zusammengefasst sind.

5. Reifendruckregulierungseinrichtung nach einem der Ansprüche 1 bis 4, **dadurch gekennzeichnet, dass** die Steuerdruckleitung (21) und die Fülldruckleitung (22) über ein Druckbegrenzungsventil (20) an eine Förderdruckleitung (19) einer Druckluftquelle (18) angeschlossen sind.

6. Reifendruckregulierungseinrichtung nach einem der Ansprüche 1 bis 4, **dadurch gekennzeichnet, dass** die Steuerdruckleitung (21) über ein Druckbegrenzungsventil (20) an die Förderdruckleitung (19) der Druckluftquelle (18) angeschlossen ist, und dass die Fülldruckleitung (22) unmittelbar an die Förderdruckleitung (19) der Druckluftquelle (18) angeschlossen ist.

7. Reifendruckregulierungseinrichtung nach einem der Ansprüche 1 bis 4, **dadurch gekennzeichnet, dass** das Vorsteuerventil (9) über ein Druckbegrenzungsventil (58) an die Steuerdruckleitung (21) angeschlossen ist, und dass die Steuerdruckleitung (21) sowie die Fülldruckleitung (22) unmittelbar an die Förderdruckleitung (19) der Druckluftquelle (18) angeschlossen sind.

8. Reifendruckregulierungseinrichtung nach einem der Ansprüche 1 bis 7, **dadurch gekennzeichnet, dass** zumindest an jede der Achsverbindungsleitungen (27, 28) jeweils ein Drucksensor (41, 42) angeschlossen ist.

9. Reifendruckregulierungseinrichtung nach einem der Ansprüche 1 bis 8, **dadurch gekennzeichnet, dass** jedem der Achsventile (12, 13) jeweils ein Umschaltventil (10, 11; 11') vorgeschaltet ist.

10. Reifendruckregulierungseinrichtung nach Anspruch 9, **dadurch gekennzeichnet, dass** alle Umschaltventile (10, 11) elektromagnetisch-pneumatisch steuerbar ausgebildet und baugleich ausgeführt sind.

11. Reifendruckregulierungseinrichtung nach Anspruch 9, **dadurch gekennzeichnet, dass** nur eines der Umschaltventile (10) elektromagnetisch-pneumatisch steuerbar ausgebildet ist, und dass die übrigen Umschaltventile (11') pneumatisch steuerbar ausgebildet sowie über eine Koppelsteuerleitung (59) an die Steuereinheit des erstgenannten Umschaltventils (10) angeschlossen sind.

12. Reifendruckregulierungseinrichtung nach einem der Ansprüche 1 bis 8, **dadurch gekennzeichnet, dass** den Achsventilen (12, 13) ein gemeinsames, elektromagnetisch-pneumatisch steuerbares Umschaltventil (60) mit entsprechend großen Strömungsquerschnitten vorgeschaltet ist.

## Claims

1. Tyre pressure regulating device (1.1, 1.2, 1.3, 1.4, 1.5), by means of which the tyre pressures of the vehicle wheels (5, 6, 7, 8) of a plurality of vehicle axles (3, 4) of a motor vehicle with pneumatic tyres can be adjusted while driving, having the following features:
- at least one switchover valve (10, 11; 11'; 60), which is arranged on the vehicle chassis (2), can be controlled in an electromagnetic/pneumatic manner, and by means of which at least one main connecting line (25, 26), which leads to an axle valve (12, 13) of a vehicle axle (3, 4), can alternately be connected to a pressure-carrying filling pressure line (22) or to an unpressurized vent line (23),
- an axle valve (12, 13), which is arranged on the vehicle chassis (2) for each vehicle axle (3, 4), can be controlled in an electromagnetic/pneumatic manner, and by means of which an axle connecting line (27, 28), which branches into outer wheel connecting lines (29, 30, 31, 32) of the relevant vehicle axle (3, 4), can alternately be connected to the respective main connecting line (25, 26) or can be shut off with respect to the latter, **characterized by**
- a pressure-controlled wheel valve (14, 15, 16, 17), which is arranged at each vehicle wheel (5, 6, 7, 8) and by means of which an inner wheel connecting line (37, 38, 39, 40), which leads into the interior of the relevant wheel tyre, can alternately be connected to the associated outer wheel connecting line (29, 30, 31, 32) or can be shut off with respect to the latter,
- a pilot control valve (9), which is arranged on the vehicle chassis (2), can be controlled in a purely electromagnetic manner or in an electromagnetic/pneumatic manner, and by means of which a main control line (44, 46), which branches into axle control lines (47, 48) of the vehicle axles (3, 4), can alternately be connected to a pressure-carrying control pressure line (21) or to a vent outlet (43),
- two-channel rotary couplings (33, 34, 35, 36), which are arranged between the vehicle axles (3, 4) and the associated vehicle wheels (5, 6, 7, 8), are provided with switchable seals, and via which the compressed air which is carried in the outer wheel connecting lines (29, 30, 31, 32) and the control pressure medium which is carried in wheel control lines (49, 50, 51, 52), which branch off from the respective axle control line (47, 48), are transferred in a pressure-tight manner.

2. Tyre pressure regulating device according to Claim 1, **characterized in that** the wheel control valves (14, 15, 16, 17) are of hydraulically controllable design, and **in that** a pneumatic/hydraulic pressure transducer (45), in which the effective pneumatic control pressure is converted into a hydraulic control pressure, is arranged between the pilot control valve (9) and the main control line (46).

3. Tyre pressure regulating device according to Claim 2, **characterized in that** the pneumatic/hydraulic pressure transducer (45) is designed as a pressure reservoir partially filled with hydraulic oil, to which a pneumatic main control line (44) connected to the pilot control valve (9) is connected at the top, and to which a hydraulic main control line (46) connected to the axle control lines (47, 48) is connected at the bottom.

4. Tyre pressure regulating device according to Claim 2 or 3, **characterized in that** the pilot control valve (9), the pressure transducer (45) and a compensating reservoir (53) connected to the hydraulic main control line (46) and filled with hydraulic oil are combined in a control module (55) having a pneumatic inlet port (56) and a hydraulic outlet port (57).

5. Tyre pressure regulating device according to one of Claims 1 to 4, **characterized in that** the control pressure line (21) and the filling pressure line (22) are connected via a pressure limiting valve (20) to a delivery pressure line (19) of a compressed air source (18) .

6. Tyre pressure regulating device according to one of Claims 1 to 4, **characterized in that** the control pressure line (21) is connected to the delivery pressure line (19) of the compressed air source (18) via a pressure limiting valve (20), and **in that** the filling pressure line (22) is connected directly to the delivery pressure line (19) of the compressed air source (18).

7. Tyre pressure regulating device according to one of Claims 1 to 4, **characterized in that** the pilot control valve (9) is connected to the control pressure line (21) via a pressure limiting valve (58), and **in that** the control pressure line (21) and the filling pressure line (22) are connected directly to the delivery pressure line (19) of the compressed air source (18).

8. Tyre pressure regulating device according to one of Claims 1 to 7, **characterized in that** a respective pressure sensor (41, 42) is connected at least to each of the axle connecting lines (27, 28).

9. Tyre pressure regulating device according to one of Claims 1 to 8, **characterized in that** a respective switchover valve (10, 11; 11') is arranged ahead of each of the axle valves (12, 13).

10. Tyre pressure regulating device according to Claim 9, **characterized in that** all the switchover valves (10, 11) are of electromagnetically/pneumatically controllable design and are of identical construction.

11. Tyre pressure regulating device according to Claim 9, **characterized in that** only one of the switchover valves (10) is of electromagnetically/pneumatically controllable design, and **in that** the remaining switchover valves (11') are of pneumatically controllable design and are connected to the control unit of the first-mentioned switchover valve (10) by a coupling control line (59).

12. Tyre pressure regulating device according to one of Claims 1 to 8, **characterized in that** a common electromagnetically/pneumatically controllable switchover valve (60) is arranged ahead of the axle valves (12, 13), said valve having correspondingly large flow cross sections.

## Revendications

1. Dispositif de régulation de la pression de pneumatiques (1.1, 1.2, 1.3, 1.4, 1.5), au moyen duquel les pressions des pneumatiques des roues de véhicule (5, 6, 7, 8) de plusieurs essieux de véhicule (3, 4) d'un véhicule automobile sur pneus peuvent être réglées pendant la marche, présentant les caractéristiques suivantes:
- au moins une vanne de commutation (10, 11; 11'; 60) disposée sur le châssis de véhicule (2) et à commande électromagnétique-pneumatique, au moyen de laquelle au moins une conduite de raccordement principale (25, 26) menant à une soupape d'essieu (12, 13) d'un essieu de véhicule (3, 4) peut être raccordée en alternance à une conduite de pression de remplissage sous pression (22) ou à une conduite d'aération sans pression (23),
- une soupape d'essieu (12, 13) disposée pour chaque essieu de véhicule (3, 4) sur le châssis de véhicule (2), à commande électromagnétique-pneumatique, au moyen de laquelle une conduite de raccordement d'essieu (27, 28) ramifiée en conduites extérieures de raccordement de roues (29, 30, 31, 32) de l'essieu de véhicule concerné (3, 4) peut en alternance être raccordée à la conduite de raccordement principale respective (25, 26) ou être fermée par rapport à celle-ci,
- une soupape de roue (14, 15, 16, 17) disposée à chaque roue de véhicule (5, 6, 7, 8), commandée par la pression, au moyen de laquelle une conduite intérieure de raccordement de roue (37, 38, 39, 40) menant dans l'espace intérieur du pneumatique de roue concerné peut en alternance être raccordée à la conduite extérieure de raccordement de roue associée (29, 30, 31, 32) ou être fermée par rapport à celle-ci,
**caractérisé par**
- une soupape de commande pilote (9) disposée sur le châssis de véhicule (2), à commande purement électromagnétique ou électromagnétique-pneumatique, au moyen de laquelle une conduite de commande principale (44, 46) ramifiée en conduites de commande d'essieu (47, 48) des essieux de véhicule (3, 4) peut être raccordée en alternance à une conduite de pression de commande sous pression (21) ou à une sortie d'aération (43),
- des couplages rotatifs à deux canaux (33, 34, 35, 36), disposés entre les essieux de véhicule (3, 4) et les roues de véhicule associées (5, 6, 7, 8), munis de joints d'étanchéité commutables, par lesquels l'air comprimé transporté dans les conduites extérieures de raccordement de roues (29, 30, 31, 32) et le fluide comprimé de commande transporté dans les conduites de commande de roues (49, 50, 51, 52) ramifiées à partir de la conduite de commande d'essieu respective (47, 48) sont transmis de façon étanche à la pression.

2. Dispositif de régulation de la pression de pneumatiques selon la revendication 1, **caractérisé en ce que** les soupapes de commande de roues (14, 15, 16, 17) peuvent être commandées par voie hydraulique, et **en ce qu'**un convertisseur de pression pneumatique-hydraulique (45) est disposé entre la soupape de commande pilote (9) et la conduite de commande principale (46), dans lequel la pression de commande pneumatique active est convertie en une pression de commande hydraulique.

3. Dispositif de régulation de la pression de pneumatiques selon la revendication 2, **caractérisé en ce que** le convertisseur de pression pneumatique-hydraulique (45) est formé par un réservoir sous pression, qui est partiellement rempli d'huile hydraulique, auquel une conduite de commande principale pneumatique (44) reliée à la soupape de commande pilote (9) est raccordée dans le haut et auquel une conduite de commande principale hydraulique (46) reliée aux conduites de commande d'essieu (47, 48) est raccordée dans le bas.

4. Dispositif de régulation de la pression de pneumatiques selon la revendication 2 ou 3, **caractérisé en ce que** la soupape de commande pilote (9), le convertisseur de pression (45) et un réservoir de compensation (53) rempli d'huile hydraulique, raccordé à la conduite de commande principale hydraulique (46), sont rassemblés dans un module de commande (55) avec un raccord d'entrée pneumatique (56) et un raccord de sortie hydraulique (57).

5. Dispositif de régulation de la pression de pneumatiques selon l'une quelconque des revendications 1 à 4, **caractérisé en ce que** la conduite de pression de commande (21) et la conduite de pression de remplissage (22) sont raccordées par une soupape de limitation de pression (20) à une conduite de pression d'alimentation (19) d'une source d'air comprimé (18).

6. Dispositif de régulation de la pression de pneumatiques selon l'une quelconque des revendications 1 à 4, **caractérisé en ce que** la conduite de pression de commande (21) est raccordée par une soupape de limitation de pression (20) à la conduite de pression d'alimentation (19) de la source d'air comprimé (18), et **en ce que** la conduite de pression de remplissage (22) est raccordée directement à la conduite de pression d'alimentation (19) de la source d'air comprimé (18).

7. Dispositif de régulation de la pression de pneumatiques selon l'une quelconque des revendications 1 à 4, **caractérisé en ce que** la soupape de commande pilote (9) est raccordée par une soupape de limitation de pression (58) à la conduite de pression de commande (21), et **en ce que** la conduite de pression de commande (21) ainsi que la conduite de pression de remplissage (22) sont raccordées directement à la conduite de pression d'alimentation (19) de la source d'air comprimé (18).

8. Dispositif de régulation de la pression de pneumatiques selon l'une quelconque des revendications 1 à 7, **caractérisé en ce qu'**un capteur de pression (41, 42) est raccordé respectivement au moins à chacune des conduites de raccordement d'essieu (27, 28).

9. Dispositif de régulation de la pression de pneumatiques selon l'une quelconque des revendications 1 à 8, **caractérisé en ce qu'**une vanne de commutation (10, 11; 11') est montée respectivement avant chacune des soupapes d'essieu (12, 13).

10. Dispositif de régulation de la pression de pneumatiques selon la revendication 9, **caractérisé en ce que** toutes des vannes de commutation (10, 11) peuvent être commandées par voie électromagnétique-pneumatique et sont de construction identique.

11. Dispositif de régulation de la pression de pneumatiques selon la revendication 9, **caractérisé en ce qu'**une seule des vannes de commutation (10) peut être commandée par voie électromagnétique-pneumatique et **en ce que** les autres vannes de commutation (11') peuvent être commandées par voie pneumatique et sont reliées par une conduite de commande de couplage (59) à l'unité de commande de la première vanne de commutation citée (10).

12. Dispositif de régulation de la pression de pneumatiques selon l'une quelconque des revendications 1 à 8, **caractérisé en ce qu'**une vanne de commutation commune à commande électromagnétique-pneumatique (60) avec des sections transversales d'écoulement de grandeur correspondante est montée avant les soupapes d'essieu (12, 13).
